# EUROPEAN PATENT APPLICATION

(11) **EP 3 923 507 A1**
(43) Date of publication of application: **15.12.2021**
(21) Application number: 21188954.8
(22) Date of filing: 18.04.2018
(51) Int. Cl.: H04L 5/00

(54) **PHYSICAL DOWNLINK CONTROL CHANNEL STRUCTURE IN LOW LATENCY SYSTEMS**

(30) Priority: 21.04.2017 US 201762488694 P; 17.04.2018 US 201815955520
(62) Divisional of application: 18722859.8
(71) Applicant: QUALCOMM Incorporated, San Diego, CA 92121-1714 (US)
(72) Inventor: HOSSEINI, Seyedkianoush, San Diego, 92121-1714 (US); CHEN, Wanshi, San Diego, 92121-1714 (US); PATEL, Shimman Arvind, San Diego, 92121-1714 (US)
(74) Representative: Dunlop, Hugh Christopher

(57) **Abstract**

Methods, systems, and devices for wireless communication are described. A base station may transmit downlink control information (DCI) to a user equipment (UE) in a control region of a shortened transmission time interval (sTTI) using an aggregation level or control channel element (CCE) structure, which may depend or vary based on characteristics of the sTTI. For instance, the CCE structure or the aggregation may vary based on a type of reference signal and/or on an sTTI index because the sTTI index may correspond to the number of resource elements available for DCI within the sTTI. The control region of the sTTI may include transmissions of cell-specific reference signals (CRSs), demodulation reference signals (DMRSs), or channel state information reference signals (CSI-RSs). The number of resource elements available for DCI within the control region may depend on whether such reference signals are present or on whether CRS-based or DMRS-based demodulation is employed.

## Description

### BACKGROUND

The following relates generally to wireless communication and more specifically to a physical downlink control channel (PDCCH) structure in low latency systems.

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems, (e.g., a Long Term Evolution (LTE) system, or a New Radio (NR) system). A wireless multiple-access communications system may include a number of base stations or access network nodes, each simultaneously supporting communication for multiple communication devices, which may be otherwise known as user equipment (UE).

Wireless multiple-access technologies have been adopted in various telecommunication standards to provide a common protocol that enables different wireless devices to communicate on a municipal, national, regional, and even global level. An example telecommunication standard is LTE. LTE is designed to improve spectral efficiency, lower costs, improve services, make use of new spectrum, and better integrate with other open standards. LTE may use OFDMA on the downlink (DL), single-carrier frequency division multiple access (SC-FDMA) on the uplink (UL), and multiple-input multiple-output (MIMO) antenna technology.

Some wireless communications systems support low latency communication between a base station and a UE using shortened transmission time intervals (sTTIs). A base station may transmit control information in a control channel within the sTTI to schedule downlink transmissions or uplink transmissions within the sTTI. In some cases, a number of resource elements available for a transmission of control information within an sTTI may vary across sTTIs, and it may be challenging to identify an appropriate amount of resources for control signaling within the sTTI.

### SUMMARY

A base station may transmit downlink control information (DCI) to a user equipment (UE) in a control region of a shortened transmission time interval (sTTI) using an aggregation level or control channel element (CCE) structure that varies based on characteristics of the sTTI. As an example, the control region may include transmissions of cell-specific reference signals (CRSs), demodulation reference signals (DMRSs), channel state information (CSI) reference signals (CSI-RSs), etc. As described herein, the aggregation level or the CCE structure may be selected based on a number of symbols available for the transmission of DCI, on a type of reference signal to be included in the control region of the sTTI, or both. Specifically, the aggregation level or the CCE structure may be selected based on the type of reference signal used (e.g., DMRS, CRS, etc.). Alternatively or additionally, the aggregation level or the CCE structure may be selected based on an index of an sTTI that includes the DCI, since the sTTI index may correspond to the number of resource elements available for DCI within the sTTI.

A method of wireless communication is described in a system that supports a first TTI duration and a second TTI duration that is greater than the first TTI duration. The method may include identifying a control region of a TTI of the first duration, determining at least one of a CCE structure or an aggregation level for the control region based at least in part on at least one of an index of the TTI of the first duration or a type of reference signal, and monitoring the control region of the TTI of the first duration for downlink control information (DCI) according to the determined CCE structure or the aggregation level.

An apparatus for wireless communication is described in a system that supports a first TTI duration and a second TTI duration that is greater than the first TTI duration. The apparatus may include means for identifying a control region of a TTI of the first duration, means for determining at least one of a CCE structure or an aggregation level for the control region based at least in part on at least one of an index of the TTI of the first duration or a type of reference signal, and means for monitoring the control region of the TTI of the first duration for DCI according to the determined CCE structure or the aggregation level.

Another apparatus for wireless communication is described in a system that supports a first TTI duration and a second TTI duration that is greater than the first TTI duration. The apparatus may include a processor, memory in electronic communication with the processor, and instructions stored in the memory. The instructions may be operable to cause the processor to identify a control region of a TTI of the first duration, determine at least one of a CCE structure or an aggregation level for the control region based at least in part on at least one of an index of the TTI of the first duration or a type of reference signal, and monitor the control region of the TTI of the first duration for DCI according to the determined CCE structure or the aggregation level.

A non-transitory computer readable medium for wireless communication is described in a system that supports a first TTI duration and a second TTI duration that is greater than the first TTI duration. The non-transitory computer-readable medium may include instructions operable to cause a processor to identify a control region of a TTI of the first duration, determine at least one of a CCE structure or an aggregation level for the control region based at least in part on at least one of an index of the TTI of the first duration or a type of reference signal, and monitor the control region of the TTI of the first duration for DCI according to the determined CCE structure or the aggregation level.

A method of wireless communication is described in a system that supports a first TTI duration and a second TTI duration that is greater than the first TTI duration. The method may include identifying a control region of a TTI of the first duration, determining at least one of a CCE structure or an aggregation level for the control region based at least in part on at least one of an index of the TTI of the first duration or a type of reference signal, and transmitting DCI in the control region of the TTI of the first duration according to the determined CCE structure or the aggregation level.

An apparatus for wireless communication is described in a system that supports a first TTI duration and a second TTI duration that is greater than the first TTI duration. The apparatus may include means for identifying a control region of a TTI of the first duration, means for determining at least one of a CCE structure or an aggregation level for the control region based at least in part on at least one of an index of the TTI of the first duration or a type of reference signal, and means for transmitting DCI in the control region of the TTI of the first duration according to the determined CCE structure or the aggregation level.

Another apparatus for wireless communication is described in a system that supports a first TTI duration and a second TTI duration that is greater than the first TTI duration. The apparatus may include a processor, memory in electronic communication with the processor, and instructions stored in the memory. The instructions may be operable to cause the processor to identify a control region of a TTI of the first duration, determine at least one of a CCE structure or an aggregation level for the control region based at least in part on at least one of an index of the TTI of the first duration or a type of reference signal, and transmit DCI in the control region of the TTI of the first duration according to the determined CCE structure or the aggregation level.

A non-transitory computer readable medium for wireless communication is described in a system that supports a first TTI duration and a second TTI duration that is greater than the first TTI duration. The non-transitory computer-readable medium may include instructions operable to cause a processor to identify a control region of a TTI of the first duration, determine at least one of a CCE structure or an aggregation level for the control region based at least in part on at least one of an index of the TTI of the first duration or a type of reference signal, and transmit DCI in the control region of the TTI of the first duration according to the determined CCE structure or the aggregation level.

### BRIEF DESCRIPTION OF THE DRAWINGS

FIG. 1 illustrates an example of a wireless communications system that supports a physical downlink control channel (PDCCH) structure in low latency systems in accordance with aspects of the present disclosure;
FIG. 2 illustrates an example of a wireless communications system that supports a PDCCH structure in low latency systems in accordance with aspects of the present disclosure;
FIG. 3 illustrates an example of a resource structure in low latency systems in accordance with aspects of the present disclosure;
FIG. 4 illustrates an example of a process flow that supports a PDCCH structure in low latency systems in accordance with aspects of the present disclosure;
FIGs. 5 through 7 show block diagrams of a device or devices that support a PDCCH structure in low latency systems in accordance with aspects of the present disclosure;
FIG. 8 illustrates a block diagram of a system including a device that supports PDCCH structure in low latency systems in accordance with aspects of the present disclosure;
FIGs. 9 through 11 show block diagrams of a device or devices that support a PDCCH structure in low latency systems in accordance with aspects of the present disclosure;
FIG. 12 illustrates a block diagram of a system including a device, such as a base station, that supports a PDCCH structure in low latency systems in accordance with aspects of the present disclosure; and
FIGs. 13 through 14 illustrate methods that support a PDCCH structure in low latency systems in accordance with aspects of the present disclosure.

### DETAILED DESCRIPTION

Wireless communications systems described herein may support efficient techniques for signaling downlink control information (DCI) to a user equipment (UE) using shortened transmission time intervals (sTTIs). A base station may select an appropriate aggregation level or control channel element (CCE) structure for a transmission of DCI based on a number of resource elements available for DCI.

By way of example, some wireless communications systems may support low latency communication between a base station and a UE. Low latency communication may be characterized by communication on sTTIs. For instance, the duration of a TTI used for low latency communication may have a shorter duration than the duration of TTIs used for other types of communication. These shorter duration or low latency TTIs may be referred to as sTTIs. In some cases, an sTTI may include a control region that spans one or more symbols in the sTTI.

The control region may be used to transmit DCI for communications during the sTTI. In some cases, however, resource elements within the control region may be used for other transmissions (e.g., reference signal transmissions). In such cases, a number of resource elements available for DCI may depend on the number of resources elements used for the other transmissions. Accordingly, it may be challenging to allocate a sufficient amount of resources for control signaling within a TTI, and inefficient techniques for allocating resources for control signaling within a TTI may result in reduced throughput in a wireless communications system (e.g., since DCI may not be decodable).

As described herein, wireless communications systems may support efficient techniques for selecting an appropriate number of resources to use for a transmission of DCI within an sTTI. In some cases, a CCE structure used for transmitting DCI to a UE may be fixed. In such cases, an aggregation level used for the DCI transmission may be selected to provide sufficient resources for the DCI. In other cases, a CCE size used for the DCI transmission to a UE may be variable. In such cases, a CCE size used for the DCI transmission may be selected to provide sufficient resources for the DCI. For example, if the sPDCCH is CRS based, then a CCE may include 4 REG. In another example, if the sPDCCH is demodulation reference signal (DMRS) based, then a CCE may include 4 REG when the sTTI includes 2 symbols, and a CCE may include 6 REG when the sTTI includes 3 symbols.

Aspects of the disclosure introduced above are described below in the context of a wireless communications system. Examples of processes and signaling exchanges that support a physical downlink control channel (PDCCH) structure for low latency systems are then described. Aspects of the disclosure are further illustrated by and described with reference to apparatus diagrams, system diagrams, and flowcharts that relate to a PDCCH structure for low latency systems.

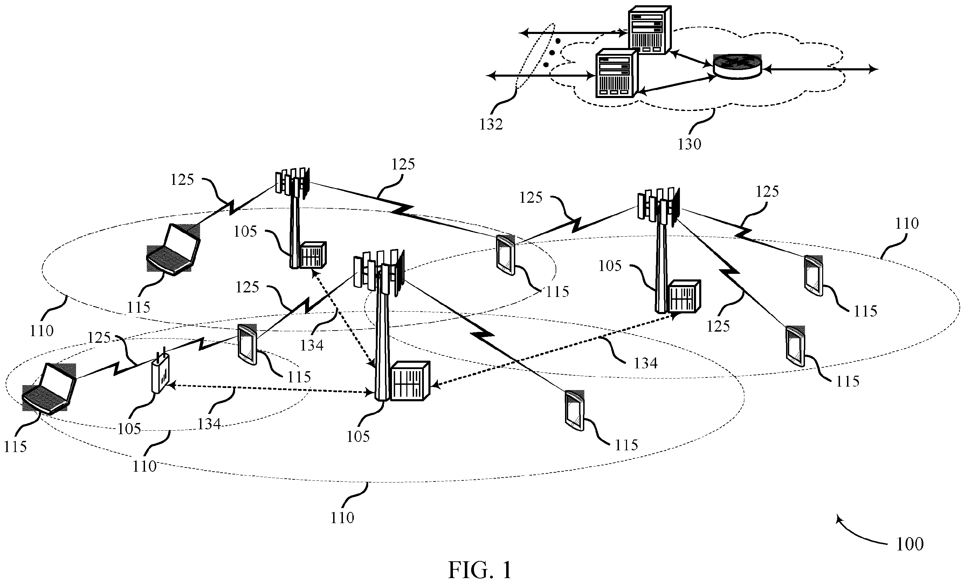

**FIG. 1** illustrates an example of a wireless communications system 100 that supports a PDCCH structure for low latency systems in accordance with various aspects of the present disclosure. The wireless communications system 100 includes base stations 105, UEs 115, and a core network 130. In some examples, the wireless communications system 100 may be a Long Term Evolution (LTE), LTE-Advanced (LTE-A) network, or a New Radio (NR) network. In some cases, wireless communications system 100 may support enhanced broadband communications, ultra-reliable (i.e., mission critical) communications, low latency communications, and communications with low-cost and low-complexity devices.

Base stations 105 may wirelessly communicate with UEs 115 via one or more base station antennas. Each base station 105 may provide communication coverage for a respective geographic coverage area 110. Communication links 125 shown in wireless communications system 100 may include uplink transmissions from a UE 115 to a base station 105, or downlink transmissions, from a base station 105 to a UE 115. Control information and data may be multiplexed on an uplink channel or downlink according to various techniques. Control information and data may be multiplexed on a downlink channel, for example, using time division multiplexing (TDM) techniques, frequency division multiplexing (FDM) techniques, or hybrid TDM-FDM techniques. In some examples, the control information transmitted during a transmission time interval (TTI) of a downlink channel may be distributed between different control regions in a cascaded manner (e.g., between a common control region and one or more UE-specific control regions).

UEs 115 may be dispersed throughout the wireless communications system 100, and each UE 115 may be stationary or mobile. A UE 115 may also be referred to as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a personal electronic device, a handheld device, a personal computer, a wireless local loop (WLL) station, an Internet of Things (IoT) device, an Internet of Everything (IoE) device, a machine type communication (MTC) device, an appliance, an automobile, or the like.

Base stations 105 may communicate with the core network 130 and with one another. For example, base stations 105 may interface with the core network 130 through backhaul links 132 (e.g., S1, etc.). Base stations 105 may communicate with one another over backhaul links 134 (e.g., X2, etc.) either directly or indirectly (e.g., through core network 130). Base stations 105 may perform radio configuration and scheduling for communication with UEs 115, or may operate under the control of a base station controller (not shown). In some examples, base stations 105 may be macro cells, small cells, hot spots, or the like. Base stations 105 may also be referred to as evolved NodeBs (eNBs) 105.

The communication links 125 between a UE 115 and base station 105 may be or represent an organization of physical resources, such as time and frequency resources. A basic unit of time and frequency may be referred to as a resource element. A resource element may consist of one symbol period and one subcarrier (e.g., a 15 KHz frequency range). In some wireless communications systems (e.g., LTE systems), a resource block may include 12 consecutive subcarriers in the frequency domain and, for a normal cyclic prefix in each orthogonal frequency division multiplexed (OFDM) symbol, 7 consecutive OFDM symbols in the time domain (1 slot), or 84 resource elements. In other wireless communications systems (e.g., low latency systems), a resource block may include 12 consecutive subcarriers in the frequency domain and one (1) symbol in the time domain, or 12 resource elements. The number of bits carried by each resource element may depend on the modulation scheme (the configuration of symbols that may be selected during each symbol period). Thus, the more resource blocks that a UE receives and the higher the modulation scheme, the higher the data rate may be.

In wireless communications system 100, a TTI may be defined as the smallest unit of time in which a base station 105 may schedule a UE 115 for uplink or downlink transmissions. As an example, a base station 105 may allocate one or more TTIs for downlink communication with a UE 115. The UE 115 may then monitor the one or more TTIs to receive downlink signals from the base station 105. In some wireless communications systems (e.g., LTE), a subframe may be the basic unit of scheduling or TTI. In other cases, such as with low latency operation, a different, reduced-duration TTI (e.g., an sTTI) may be used. Wireless communications system 100 may employ various TTI durations.

In some cases, an sTTI may contain less symbols than a subframe (e.g., 1, 2, or 3 symbols). The sTTI may include a control channel (e.g., a physical downlink control channel (PDCCH)) used to schedule downlink or uplink communication on a data channel (e.g., a physical downlink shared channel (PDSCH)) within the sTTI. In other words, the sTTI may be self-contained. Because an sTTI may include only a few symbols (e.g., less than other TTIs), an sTTI may be configured with a short PDCCH (sPDCCH) used to transmit control information to a UE. The sPDCCH may include short control channel elements (sCCEs) and short resource element groups (sREGs) that may include control information for a UE 115. An sREG may consist of a resource block that includes 12 subcarriers within one orthogonal frequency division multiplexing (OFDM) symbol. The number of symbols used for control signaling (e.g., used as a control channel) may be configured by higher layer signaling.

In some cases, resource elements within an sREG may be used for transmissions other than DCI transmissions. For example, resource elements within an sREG may be used to transmit different types of reference signals (e.g., cell-specific reference signals (CRSs), DMRSs, and channel-state information reference signals (CSI-RSs)). As such, the number of resource elements available for a transmission of DCI within an sTTI may depend on the number of resource elements used for other transmissions within the sTTI. In some aspects, it may be challenging to allocate an appropriate amount of resources for control signaling while, for example, accommodating other transmissions within a control channel.

Wireless communications system 100 may support efficient techniques for identifying an appropriate amount of resources for control signaling between a base station 105 and a UE 115. Specifically, wireless communications system 100 may support efficient techniques for selecting an appropriate aggregation level or CCE structure for a transmission of DCI within an sTTI. In some cases, an sCCE may include a fixed number of sREGs (e.g., a fixed sized sCCE). For example, an sCCE may include a fixed number of sREGs for CRS-based control. In such cases, if a number of resource elements available for control signaling is low, a base station may use a larger aggregation level or CCE size to transmit the control signaling. In other cases, a number of sREGs within an sCCE may vary. Such may be the case when the reference signal is a DMRS. In such cases, the number of sREGs within a sCCE used for a transmission of control information (e.g., the size of the sCCE) may depend on a number of resource elements available for control signaling within an sTTI or may depend on the number of OFDM symbols forming an sTTI.

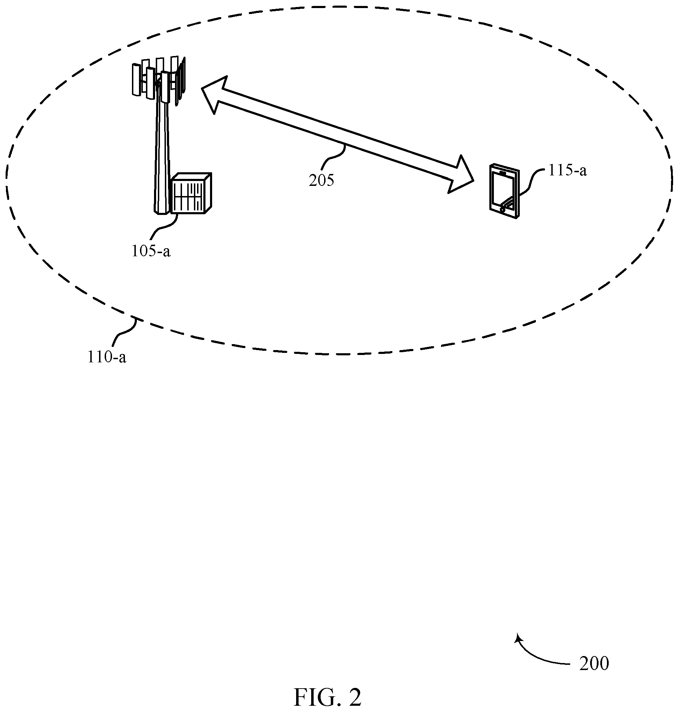

**FIG. 2** illustrates an example of a wireless communications system 200 that supports a PDCCH structure in low latency systems in accordance with various aspects of the present disclosure. Wireless communications system 200 includes base station 105-a and UE 115-a, which may be examples of base stations 105 and UEs 115 described with reference to FIG. 1. Base station 105-a may provide communication coverage for a coverage area 110-a. Base station 105-a and UE 115-a may communicate on resources of a carrier 205. In the example of FIG. 2, base station 105-a may support low latency communications with UE 115-a during sTTIs on resources of carrier 205.

Base station 105-a may schedule communication within an sTTI on carrier 205 using an sPDCCH in the sTTI (i.e., a control region of the TTI). Specifically, base station 105-a may transmit DCI in the sPDCCH of the sTTI. As described with reference to FIG. 1, the sPDCCH may include sCCEs which may include sREGs that contain DCI for a receiving UE 115-a. In some cases, sCCEs within the sPDCCH may include a fixed number of sREGs (e.g., four (4) sREGs), and, in other cases, sCCEs within the sPDCCH may include a variable number of sREGs (e.g., three (3), four (4), or six (6)).

In some cases, the number of resource elements available for DCI within an sREG may vary depending on the number of resource elements used for other signaling in the sREG. For example, for a DMRS based reference signal demodulation scheme, an REG may include a maximum of nine (9) resource elements available for DCI in an sTTI (e.g., a minimum three (3) resource elements containing DMRS). Alternatively, for a CRS based reference signal demodulation scheme, an REG may include a maximum of 12 resource elements available for DCI (e.g., a minimum of zero (0) resource elements containing CRS). Additionally, resource elements in an sREG may include CSI-RSs, further reducing the number of resource elements available for DCI.

Wireless communications system 200 may support efficient techniques for providing sufficient resources for DCI in an sPDCCH of an sTTI. For instance, base station 105-a may determine an sCCE structure or an aggregation level for DCI transmissions in the sPDCCH based on the sTTI index of the sTTI that includes the sPDCCH. In some examples, an sCCE within the sPDCCH may include a fixed number of sREGs (e.g., a fixed size sCCE), and the aggregation level may be determined to provide sufficient resources for DCI, and, in other examples, an sCCE within the sTTI may include a variable number of sREGs (e.g., sCCEs of varying sizes), and the number of sREGs may be configured to provide sufficient resources for DCI. The sTTI index may correspond to the number of resource elements available for DCI since the number of resource elements containing CRS, DMRS, CSI-RS, etc. may depend on the index of the sTTI.

As described herein, base station 105-a may use smaller aggregation levels or smaller sCCEs for DCI transmissions in sTTIs with a larger number of resource elements available for DCI, and base station 105-a may use larger aggregation levels or larger sCCEs for DCI transmissions in sTTIs with a larger number of resource elements available for DCI. Further, base station 105-a may determine the sCCE structure or aggregation level for DCI transmissions in an sTTI based on determining whether a number of resource elements available for DCI within an sPDCCH of the sTTI is above a certain threshold. Because the aggregation level may be selected based on an sTTI index, the aggregation level may be different for each sTTI within a subframe. In some cases, determining the aggregation level for DCI transmissions may also herein refer to determining the number of blind decodes per aggregation level, which may be a function of the sTTI index or a group of sTTI indices.

In addition to determining the CCE structure or aggregation level for DCI transmissions in an sTTI based on the sTTI index, base station 105-a may determine the CCE structure or aggregation level based on other factors. In some cases, the set of aggregation levels may be known, and for each aggregation level a number of blind decodes should be supported. For example, if the number of blind decodes for aggregation level 4 is zero, it means this aggregation level is not supported. For each sTTI, or for a group of sTTIs, the base station 105-a may configure the number of blind decodes per aggregation level. In some aspects, base station 105-a may determine the CCE structure or aggregation level based on a configured type of reference signal demodulation scheme used for DCI transmissions in the sTTI (e.g., DMRS-based sPDCCH or CRS-based sPDCCH). For example, CRS-based sPDCCHs may have a larger number of resource elements available for DCI than DMRS-based sPDCCHs, so base station 105-a may use larger sCCEs or a larger aggregation level for DCI transmissions on DMRS-based sPDCCHs than for DCI transmissions on CRS based sPDCCHs. In another example, CRS-based sPDCCHs may have a fixed CCE structure, and DMRS-based sPDCCHs may have a variable CCE structure (e.g., CCE structure based on number of symbols in sTTI).

Base station 105-a may further determine the CCE structure or aggregation level based on techniques used to map DCI to an sPDCCH (e.g., distributed or localized mapping). For example, since DCI may be more spread out for distributed mapping, base station 105-a may use larger sCCEs or a larger aggregation level (e.g., 2, 4, 8, or 16) for distributed mapping and smaller sCCEs or a smaller aggregation level (e.g., 1, 2, 4, or 8) for localized mapping. Additionally or alternatively, base station 105-a may determine the CCE structure or aggregation level for DCI transmissions based on a DCI format of DCI (e.g., short DCI) transmitted in the control region of an sTTI. Each DCI format may be associated with a payload size, and base station 105-a may use larger sCCEs or larger aggregation levels for DCI formats with larger payload sizes (e.g., the DCI format associated with downlink multiple-input multiple-output (MIMO)).

The techniques described above allow for an appropriate selection of an aggregation level for DCI transmissions in an sTTI. However, in some cases, if the control region includes DCI for a high number of users, the control region may span a large portion of a system bandwidth, which may result in high overhead. As described herein, in order to limit overhead, base station 105-a may determine an aggregation level (or a set of aggregation levels) for DCI transmissions in an sTTI based on the number of symbols that include DCI in an sTTI. For example, base station 105-a may use a larger aggregation level for DCI transmissions on two (2) symbols than for DCI transmissions on one (1) symbol. Base station 105-a may signal the number of symbols that may include DCI to UE 115-a, and UE 115-a may determine the aggregation level used for DCI transmissions in the sPDCCH based on the number of symbols that include DCI.

In addition to the techniques described above, a base station may rate-match data bits around resource elements containing DCI in order to make use of unused resource elements in a control region of an sTTI. Base station 105-a may indicate to UE 115-a (e.g., in a rate-matching bit field in the DCI) which resource elements are not used for DCI, and UE 115-a may determine that these resource elements contain downlink data. In some cases, however, it may be challenging to signal the location of resource elements containing DCI to allow UE 115-a to identify resource elements containing downlink data. Inefficient techniques for signaling the location of resource elements containing DCI may result in reduced throughput in a wireless communications system.

Wireless communications system 200 may support efficient techniques for signaling the location of resource elements containing DCI to allow UE 115-a to receive and decode downlink data transmitted on the remaining resource elements in a control region of an sTTI. In some examples, each sCCE in a control region of an sTTI may span a single symbol to limit the amount of signaling used to indicate the location of an sCCE (e.g., for CRS-based control). In other examples, decoding candidates of an aggregation level may also span a single symbol to limit the amount of signaling used to indicate the location of decoding candidates that contain DCI. In yet other examples, sCCEs may be indexed in a frequency-first time-second manner to limit the amount of signaling used to indicate the location of sCCEs in the control region. Similarly, sREGs may be also indexed in a frequency-first time-second manner to limit the amount of signaling used to indicate the location of sREGs in the sCCEs.

In some cases, the number of symbols used for DCI transmissions in an sTTI may be cell specific. For example, base station 105-a may use the same number of symbols for DCI transmissions to UE 115-a within coverage area 110-a (e.g., UEs 115 being served by the cell). Accordingly, base station 105-a may be able to use limited signaling to indicate the location of resource elements containing DCI to allow UE 115-a to determine the location of data resources rate-matched around the resource elements containing DCI.

In other cases, the number of symbols used for DCI transmissions in an sTTI may be UE-specific. For example, base station 105-a may use a different number of symbols for DCI transmissions to different UEs 115 within coverage area 110-a (e.g., UEs 115 being served by the cell). In such cases, UEs within coverage area 110-a may be configured to receive DCI on one symbol (e.g., a one-symbol control region), two symbols (e.g., a two-symbol control region), or subset of UEs 115 in coverage area 110-a may be configured to receive DCI on one symbol and another subset of UEs 115 in coverage area 110-a may be configured to receive DCI on two symbols.

Accordingly, UE 115-a may receive signaling indicating if other UEs are configured to receive DCI in a one-symbol control region, two-symbol control region or a combination of the two types of control regions (i.e., with some UEs configured with a one-symbol control region and others configured with a two-symbol control region). And, in some cases, UE 115-a may determine the location of resource elements that contain DCI based on the signaling. In other cases, base station 105-a may use additional bits (e.g., two (2) bits)) to signal the portion of a control region containing DCI to allow UE 115-a to determine the location of resource elements that contain the DCI. In other words, base station 105-a may be able to use limited signaling (e.g., two (2) bits) to indicate the location of the portion of resource elements containing DCI to allow UE 115-a to determine the location of data resources rate-matched around the resource elements containing DCI.

For example, UEs within coverage area 110-a (e.g., including UE 115-a) may be configured with a one-symbol control region or a two-symbol control region, and base station may transmit additional bits to indicate which portion of the control region contains DCI. Base station 105-a may transmit '00' to indicate that the entire control region is available for data transmissions (i.e., no DCI is included), to indicate that a first half of resource elements within the control region contains DCI, '10' to indicate that three quarters of resource elements within the control region contains DCI, and '11' to indicate that the entire control region contains DCI. Alternatively, each of the additional bits may correspond to whether a portion of resource elements within the control region contains DCI. For example, a first bit of a two-bit indicator may be used to indicate whether the first half of resource elements or the first group of CCEs within the control region contains DCI, while a second bit of the two-bit indicator may be used to indicate whether the second half of resource elements within the control region contains DCI. In some cases, if a portion of the control region is indicated to be occupied, then the PDSCH for the UE may not be mapped to those resources of the control region. Further, if other UEs within coverage area 110-a are configured with different numbers of symbols for a control region and UE 115-a is configured with a two-symbol control region, base station 105-a may transmit '01' or '10' to convey information about a portion of the control region in the second symbol that contains DCI.

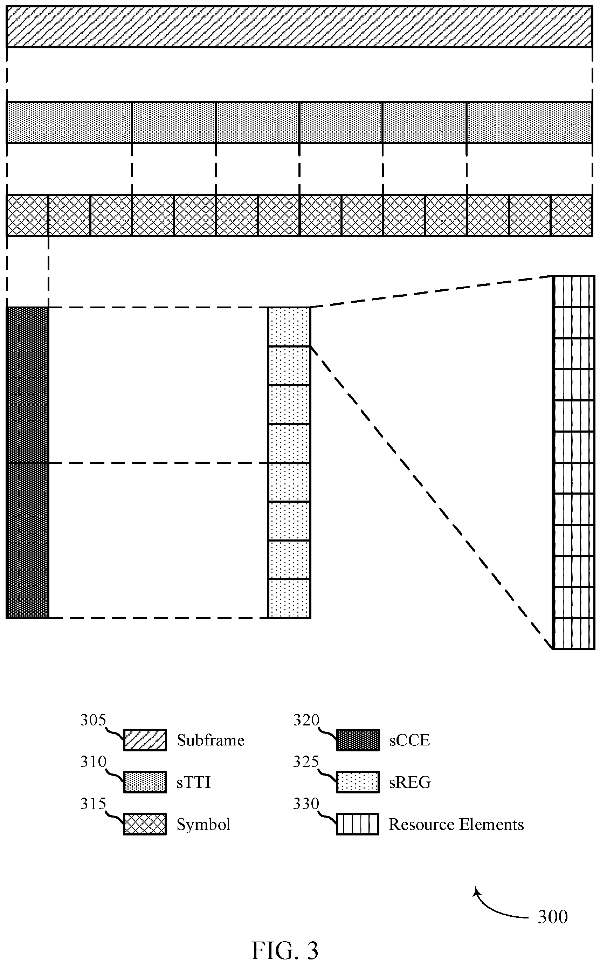

**FIG. 3** illustrates an example of a resource structure 300 in low latency systems in accordance with various aspects of the present disclosure. Resource structure 300 provides an illustration of various groups of resources described herein. Resource structure 300 includes a subframe 305, which may represent a TTI in some wireless communications systems (e.g., LTE systems). Subframe 305 may include multiple sTTIs 310 which may represent a TTI in other wireless communications systems (e.g., low latency systems).

sTTIs 310 may each include multiple symbols (e.g., two (2) or three (3)) symbols, and each sTTI 310 may be self-contained. That is, each sTTI 310 may include a control region that schedules the transmission of low latency data during the sTTI 310 (e.g., uplink or downlink low latency communications). Further, each sTTI 310 may be associated with an index that indicates a number of resource elements available for a transmission of DCI in a control region of the sTTI 310. For example, the third sTTI 310 in subframe 305 may be associated with an index of two (2), and a number of resource elements used for other signaling (e.g., CRS transmissions) in the sTTI may be determined based on the sTTI index.

The control region of an sTTI 310 may be referred to as an sPDCCH and may be structured to support an efficient use of resources as described herein. As illustrated, a symbol 315 of an sTTI 310 includes multiple (i.e., two (2)) sCCEs 320 that span a portion of the system bandwidth. The sCCEs 320 contains DCI that is used to provide control information for communications during the sTTI 310. A base station 105 may transmit DCI during multiple sCCEs 320 (as shown), where the number of sCCEs 320 used for the transmission of DCI represents the aggregation level used by the base station for the transmission of DCI. In the example of FIG. 3, a base station may utilize an aggregation level of two (2) for control transmissions to a UE 115 during an sTTI 310 (i.e., two sCCEs 320). In other examples, a base station may utilize an aggregation level of one (1) (i.e., one sCCE 320), four (4) (i.e., four sCCEs 320), etc. for control transmissions to a UE 115 during an sTTI 310.

Each sCCE may include a fixed number of sREGs 325 (e.g., four (4)) or may include a variable number of sREGs 325 (not shown). Each sREG 325 may include one (1) resource block which may include 12 resource elements 330 within a symbol 315. As described above, in some cases, some resource elements 330 within an sREG 325 may be used for other signaling (e.g., CRS, DMRS, or CSI-RS transmissions). The techniques described herein may allow a base station 105 to identify an aggregation level or CCE structure (e.g., CCE size) for a transmission of DCI based on characteristics of an sTTI 310.

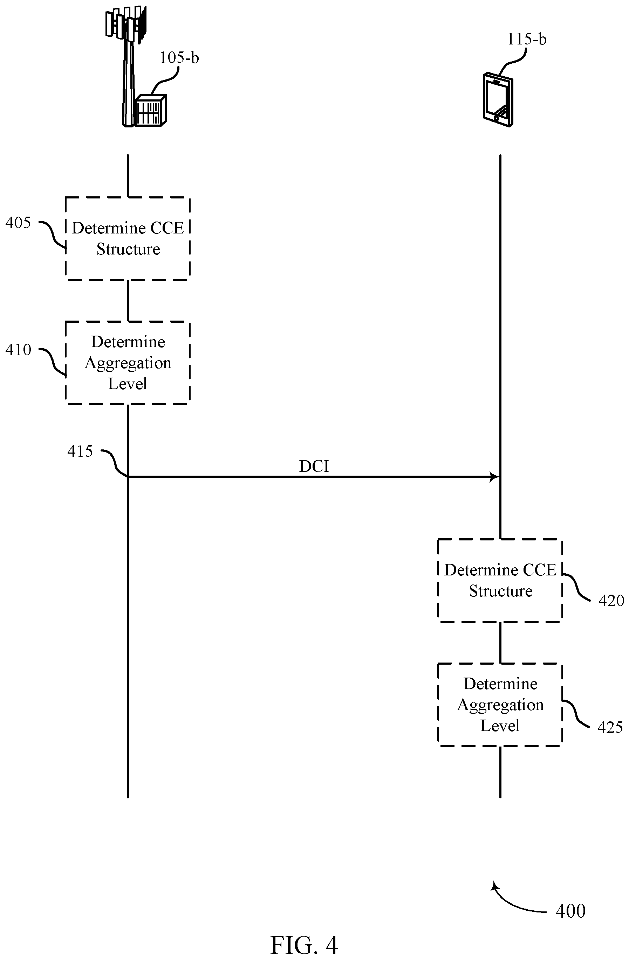

**FIG. 4** illustrates an example of a process flow 400 that supports a PDCCH structure in low latency systems in accordance with various aspects of the present disclosure. Process flow 400 illustrates aspects of techniques performed by a base station 105-b and a UE 115-b, which may be examples of a base station 105 and a UE 115 described with reference to FIGs. 1-2.

At 405 and 410, base station 105-b may determine a CCE structure (e.g., an sCCE structure) or an aggregation level for a control region of a TTI of a first duration (i.e., an sTTI) based on an index of the TTI of the first duration and/or a type of reference signal (e.g., DMRS-based or CRS-based control). In some examples, the CCE structure may include a fixed number of REGs (e.g., sREGs) and the aggregation level may be based on the index of the TTI of the first duration. The number of resource elements in each REG may be independent of a configured reference signal demodulation scheme (e.g., CRS or DMRS based demodulation scheme). In some cases, the number of resource elements in each REG available for a DCI may be based on a configured reference signal demodulation scheme.

In some examples, one or more of the REGs may include resource elements containing CRSs, DMRSs, or CSI-RSs, or any combination thereof. In other examples, one or more of the REGs may be exclusive of resource elements containing CRSs, DMRSs, or CSI-RSs, or any combination thereof. In some cases, base station 105-b may determine the CCE structure or aggregation level for the control region based on whether a number of resource elements available for DCI in the control region is above a threshold, whether resources elements in the control region contain DMRSs (i.e., whether the control region is configured for DMRS-based demodulation or CRS-based demodulation), whether a mapping of the DCI to the control region is distributed or localized, or based on a format of the DCI.

At 415, base station 105-b may transmit the DCI in the control region of the TTI of the first duration according to the determined CCE structure or the aggregation level. Base station 105-b may transmit signaling to UE 115-b that indicates a number of symbols for the control region. In some examples, base station 105-b and UE 115-b may determine the aggregation level based on the number of symbols for the control region. In some cases, base station 105-b may rate-match data bits around resource elements used for the transmission of the DCI based on the number of symbols for the control region. Base station 105-b may transmit the rate-matched data bits during the TTI of the first duration. UE 115-b may receive data during the TTI of the first duration using the rate-matching that is based on the number of symbols for the control region.

In some examples, the number of symbols for the control region may be cell-specific. Alternatively, the number of symbols for the control region may be UE-specific. In such cases, the signaling may indicate a control channel configuration for a set of UEs communicating within a cell. The signaling may indicate that each UE of the set is configured with a one-symbol control region, or that each UE of the set is configured with a two-symbol control region, or that a first subset of the UEs is configured with a one-symbol control region and a second subset of the UEs is configured with a two-symbol control region.

In some examples, base station 105-b may transmit additional signaling that indicates a control channel configuration for a set of UEs communicating within the cell, where the additional signaling includes an indication that each UE of the set is configured with a one-symbol control region, or that each UE of the set is configured with a two-symbol control region, or that a first subset of the UEs is configured with a one-symbol control region and a second subset of the UEs is configured with a two-symbol control region. Base station 105-b may also transmit additional signaling to indicate a portion of a set of resource elements of the control region that includes DCI.

In some examples, the number of symbols for the control region may be two. In some cases, each CCE in the control region may span a single symbol in the control region. In some cases, each decoding candidate associated with the aggregation level in the control region may span a single symbol in the control region. In some cases, each CCE in the control region may be assigned an index that indicates a location of the CCE in a frequency domain followed by the location of the CCE in a time domain.

At 420 and 425, UE 115-b may determine a CCE structure or an aggregation level for a control region of a TTI of a first duration based on an index of the TTI of the first duration. Additionally, UE 115-b may monitor the control region of the TTI of the first duration for the DCI according to the determined CCE structure or the aggregation level. In some examples, the CCE structure may include a fixed number of REGs and the aggregation level may be based on the index of the TTI of the first duration. The number of resource elements in each REG may be independent of a configured reference signal demodulation scheme. Alternatively, the number of resource elements in each REG available for the DCI may be based on a configured reference signal demodulation scheme.

In some examples, one or more of the REGs may include resource elements containing CRSs, DMRSs, or CSI-RSs, or any combination thereof. In other examples, one or more of the REGs may be exclusive of resource elements containing CRSs, DMRSs, or CSI-RSs, or any combination thereof. In some cases, UE 115-b may determine the CCE structure or aggregation level for the control region based on whether a number of resource elements available for DCI in the control region is above a threshold, whether resources elements in the control region contain DMRSs (i.e., whether the control region is configured for DMRS-based demodulation), whether a mapping of the DCI to the control region is distributed or localized, or based on a format of the DCI.

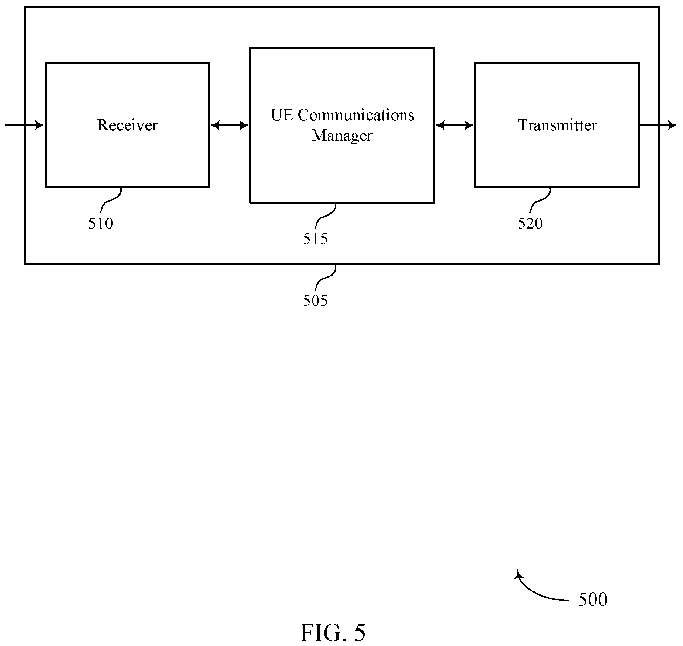

**FIG. 5** shows a block diagram 500 of a wireless device 505 that supports a PDCCH structure in low latency systems in accordance with aspects of the present disclosure. Wireless device 505 may be an example of aspects of a UE 115 as described herein. Wireless device 505 may include receiver 510, UE communications manager 515, and transmitter 520. Wireless device 505 may also include a processor. Each of these components may be in communication with one another (e.g., via one or more buses).

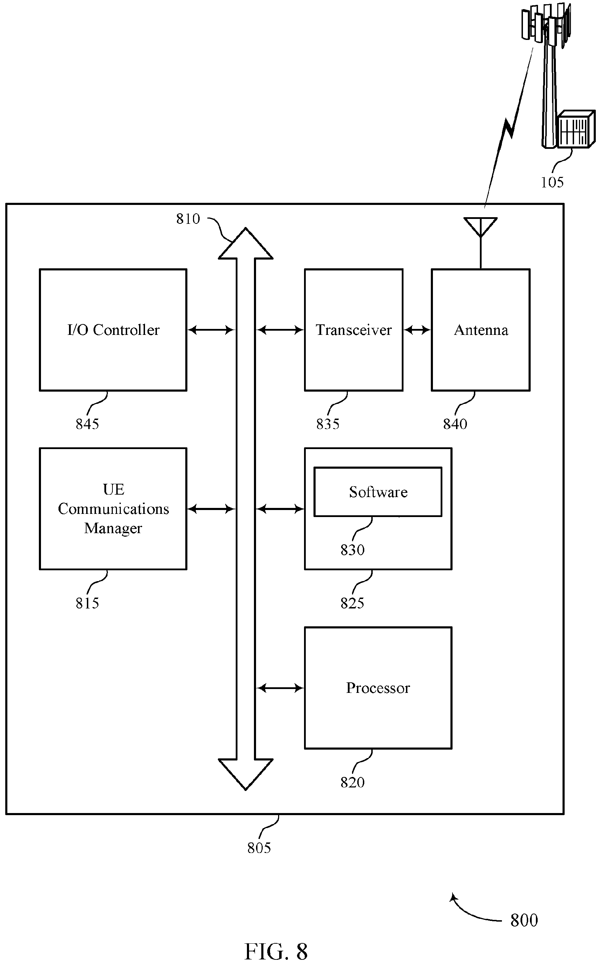

Receiver 510 may receive information such as packets, user data, or control information associated with various information channels (e.g., control channels, data channels, and information related to PDCCH structure in low latency systems, etc.). Information may be passed on to other components of the device. The receiver 510 may be an example of aspects of the transceiver 835 described with reference to FIG. 8. The receiver 510 may utilize a single antenna or a set of antennas.

UE communications manager 515 may be an example of aspects of the UE communications manager 815 described with reference to FIG. 8. UE communications manager 515 or at least some of its various sub-components may be implemented in hardware, software executed by a processor, firmware, or any combination thereof. If implemented in software executed by a processor, the functions of the UE communications manager 515 or at least some of its various sub-components may be executed by a general-purpose processor, a digital signal processor (DSP), an application-specific integrated circuit (ASIC), an field-programmable gate array (FPGA) or other programmable logic device, discrete gate or transistor logic, discrete hardware components, or any combination thereof designed to perform the functions described in the present disclosure.

The UE communications manager 515 or at least some of its various sub-components may be physically located at various positions, including being distributed such that portions of functions are implemented at different physical locations by one or more physical devices. In some examples, UE communications manager 515 or at least some of its various sub-components may be a separate and distinct component in accordance with various aspects of the present disclosure. In other examples, UE communications manager 515 or at least some of its various sub-components may be combined with one or more other hardware components, including but not limited to an I/O component, a transceiver, a network server, another computing device, one or more other components described in the present disclosure, or a combination thereof in accordance with various aspects of the present disclosure.

UE communications manager 515 may identify a control region of a TTI of the first duration, determine at least one of a CCE structure or an aggregation level for the control region based on an index of the TTI of the first duration, and monitor the control region of the TTI of the first duration for DCI according to the determined CCE structure or the aggregation level.

Transmitter 520 may transmit signals generated by other components of the device. In some examples, the transmitter 520 may be collocated with a receiver 510 in a transceiver module. For example, the transmitter 520 may be an example of aspects of the transceiver 835 described with reference to FIG. 8. The transmitter 520 may utilize a single antenna or a set of antennas.

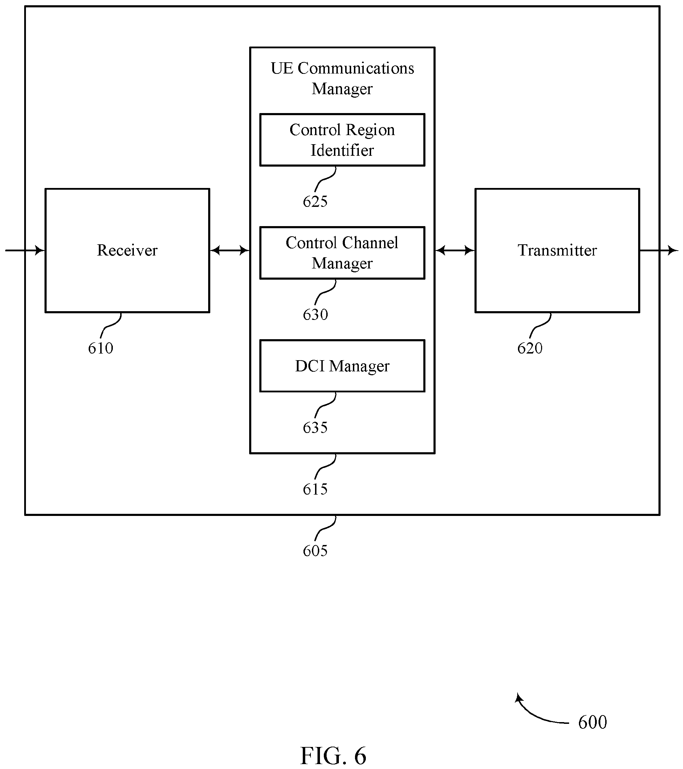

**FIG. 6** shows a block diagram 600 of a wireless device 605 that supports a PDCCH structure in low latency systems in accordance with aspects of the present disclosure. Wireless device 605 may be an example of aspects of a wireless device 505 or a UE 115 as described with reference to FIG. 5. Wireless device 605 may include receiver 610, UE communications manager 615, and transmitter 620. Wireless device 605 may also include a processor. Each of these components may be in communication with one another (e.g., via one or more buses).

Receiver 610 may receive information such as packets, user data, or control information associated with various information channels (e.g., control channels, data channels, and information related to PDCCH structure in low latency systems, etc.). Information may be passed on to other components of the device. The receiver 610 may be an example of aspects of the transceiver 835 described with reference to FIG. 8. The receiver 610 may utilize a single antenna or a set of antennas.

UE communications manager 615 may be an example of aspects of the UE communications manager 815 described with reference to FIG. 8. UE communications manager 615 may include control region identifier 625, control channel manager 630, and DCI manager 635.

Control region identifier 625 may identify a control region of a TTI of the first duration, receive signaling that indicates a number of symbols that include the control region, receive additional signaling that indicates a control channel configuration for a set of UEs communicating within the cell, where the additional signaling includes an indication that each UE of the set is configured with a one-symbol control region, or that each UE of the set is configured with a two-symbol control region, or that a first subset of the UEs is configured with a one-symbol control region and a second subset of the UEs is configured with a two-symbol control region, and receive additional signaling that indicates a portion of a set of resource elements of the control region that includes DCI. In some cases, each CCE in the control region is assigned an index that indicates a location of the CCE in a frequency domain followed by the location of the CCE in a time domain. In some cases, the number of symbols that include the control region is cell-specific.

In some cases, the number of symbols that include the control region is UE-specific. In some cases, the signaling indicates a control channel configuration for a set of UEs communicating within a cell. In some cases, the signaling indicates that each UE of the set is configured with a one-symbol control region, or that each UE of the set is configured with a two-symbol control region, or that a first subset of the UEs is configured with a one-symbol control region and a second subset of the UEs is configured with a two-symbol control region. In some cases, the number of symbols that include the control region is two. In some cases, each CCE in the control region spans a single symbol in the control region. In some cases, each decoding candidate associated with the aggregation level in the control region spans a single symbol in the control region.

Control channel manager 630 may determine at least one of a CCE structure or an aggregation level for the control region based on an index of the TTI of the first duration, determine the aggregation level based on the number of symbols that include the control region, and determine the CCE structure or the aggregation level for the control region based on the identification. In some cases, a number of resource elements in each REG is independent of a configured reference signal demodulation scheme. In some cases, a number of resource elements in each REG available for DCI is based on a configured reference signal demodulation scheme. In some cases, one or more of the REGs include resource elements containing CRSs, DMRSs, or CSI-RSs, or any combination thereof. In some cases, the CCE structure includes a fixed number of REGs and the aggregation level is based on the index of the TTI of the first duration. In some cases, one or more of the REGs are exclusive of resource elements containing CRSs, DMRSs, or CSI-RSs, or any combination thereof.

DCI manager 635 may monitor the control region of the TTI of the first duration for DCI according to the determined CCE structure or the aggregation level, identify whether a number of resource elements available for DCI in the control region is above a threshold, identify whether a mapping of the DCI to the control region is distributed or localized, and identify a format of the DCI.

Transmitter 620 may transmit signals generated by other components of the device. In some examples, the transmitter 620 may be collocated with a receiver 610 in a transceiver module. For example, the transmitter 620 may be an example of aspects of the transceiver 835 described with reference to FIG. 8. The transmitter 620 may utilize a single antenna or a set of antennas.

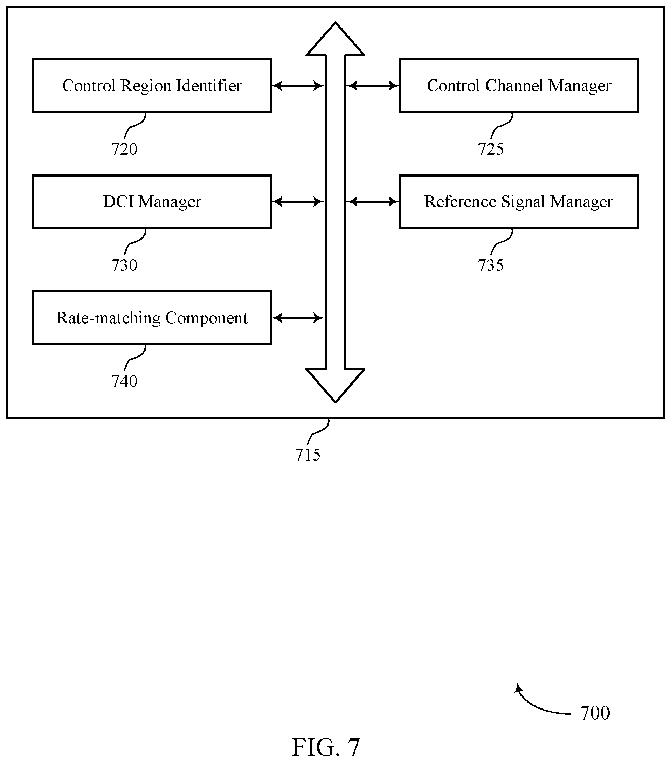

**FIG. 7** shows a block diagram 700 of a UE communications manager 715 that supports a PDCCH structure in low latency systems in accordance with aspects of the present disclosure. The UE communications manager 715 may be an example of aspects of a UE communications manager 515, a UE communications manager 615, or a UE communications manager 815 described with reference to FIGs. 5, 6, and 8. The UE communications manager 715 may include control region identifier 720, control channel manager 725, DCI manager 730, reference signal manager 735, and rate-matching component 740. Each of these modules may communicate, directly or indirectly, with one another (e.g., via one or more buses).

Control region identifier 720 may identify a control region of a TTI of the first duration, receive signaling that indicates a number of symbols that include the control region, receive additional signaling that indicates a control channel configuration for a set of UEs communicating within the cell, where the additional signaling includes an indication that each UE of the set is configured with a one-symbol control region, or that each UE of the set is configured with a two-symbol control region, or that a first subset of the UEs is configured with a one-symbol control region and a second subset of the UEs is configured with a two-symbol control region, and receive additional signaling that indicates a portion of a set of resource elements of the control region that includes DCI. In some cases, each CCE in the control region is assigned an index that indicates a location of the CCE in a frequency domain followed by the location of the CCE in a time domain. In some cases, the number of symbols that include the control region is cell-specific.

In some cases, the number of symbols that include the control region is UE-specific. In some cases, the signaling indicates a control channel configuration for a set of UEs communicating within a cell. In some cases, the signaling indicates that each UE of the set is configured with a one-symbol control region, or that each UE of the set is configured with a two-symbol control region, or that a first subset of the UEs is configured with a one-symbol control region and a second subset of the UEs is configured with a two-symbol control region. In some cases, the number of symbols that include the control region is two. In some cases, each CCE in the control region spans a single symbol in the control region. In some cases, each decoding candidate associated with the aggregation level in the control region spans a single symbol in the control region.

Control channel manager 725 may determine at least one of a CCE structure or an aggregation level for the control region based on an index of the TTI of the first duration, determine the aggregation level based on the number of symbols that include the control region, and determine the CCE structure or the aggregation level for the control region based on the identification. In some cases, a number of resource elements in each REG is independent of a configured reference signal demodulation scheme. In some cases, a number of resource elements in each REG available for DCI is based on a configured reference signal demodulation scheme. In some cases, one or more of the REGs include resource elements containing CRSs, DMRSs, or CSI-RSs, or any combination thereof. In some cases, the CCE structure includes a fixed number of REGs and the aggregation level is based on the index of the TTI of the first duration. In some cases, one or more of the REGs are exclusive of resource elements containing CRSs, DMRSs, or CSI-RSs, or any combination thereof.

DCI manager 730 may monitor the control region of the TTI of the first duration for DCI according to the determined CCE structure or the aggregation level, identify whether a number of resource elements available for DCI in the control region is above a threshold, identify whether a mapping of the DCI to the control region is distributed or localized, and identify a format of the DCI.

Reference signal manager 735 may identify whether resource elements in the control region contain DMRSs or whether the control region is configured for DMRS-based demodulation. Rate-matching component 740 may receive data during the TTI of the first duration using rate-matching that is based on the number of symbols that include the control region.

**FIG. 8** shows a diagram of a system 800 including a device 805 that supports a PDCCH structure in low latency systems in accordance with aspects of the present disclosure. Device 805 may be an example of or include the components of wireless device 505, wireless device 605, or a UE 115 as described above, e.g., with reference to FIGs. 5 and 6. Device 805 may include components for bi-directional voice and data communications including components for transmitting and receiving communications, including UE communications manager 815, processor 820, memory 825, software 830, transceiver 835, antenna 840, and I/O controller 845. These components may be in electronic communication via one or more buses (e.g., bus 810). Device 805 may communicate wirelessly with one or more base stations 105.

Processor 820 may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, processor 820 may be configured to operate a memory array using a memory controller. In other cases, a memory controller may be integrated into processor 820. Processor 820 may be configured to execute computer-readable instructions stored in a memory to perform various functions (e.g., functions or tasks supporting PDCCH structure in low latency systems).

Memory 825 may include random access memory (RAM) and read only memory (ROM). The memory 825 may store computer-readable, computer-executable software 830 including instructions that, when executed, cause the processor to perform various functions described herein. In some cases, the memory 825 may contain, among other things, a basic input/output system (BIOS) which may control basic hardware or software operation such as the interaction with peripheral components or devices.

Software 830 may include code to implement aspects of the present disclosure, including code to support PDCCH structure in low latency systems. Software 830 may be stored in a non-transitory computer-readable medium such as system memory or other memory. In some cases, the software 830 may not be directly executable by the processor but may cause a computer (e.g., when compiled and executed) to perform functions described herein.

Transceiver 835 may communicate bi-directionally, via one or more antennas, wired, or wireless links as described above. For example, the transceiver 835 may represent a wireless transceiver and may communicate bi-directionally with another wireless transceiver. The transceiver 835 may also include a modem to modulate the packets and provide the modulated packets to the antennas for transmission, and to demodulate packets received from the antennas.

In some cases, the wireless device may include a single antenna 840. However, in some cases the device may have more than one antenna 840, which may be capable of concurrently transmitting or receiving multiple wireless transmissions.

I/O controller 845 may manage input and output signals for device 805. I/O controller 845 may also manage peripherals not integrated into device 805. In some cases, I/O controller 845 may represent a physical connection or port to an external peripheral. In some cases, I/O controller 845 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, I/O controller 845 may represent or interact with a modem, a keyboard, a mouse, a touchscreen, or a similar device. In some cases, I/O controller 845 may be implemented as part of a processor. In some cases, a user may interact with device 805 via I/O controller 845 or via hardware components controlled by I/O controller 845.

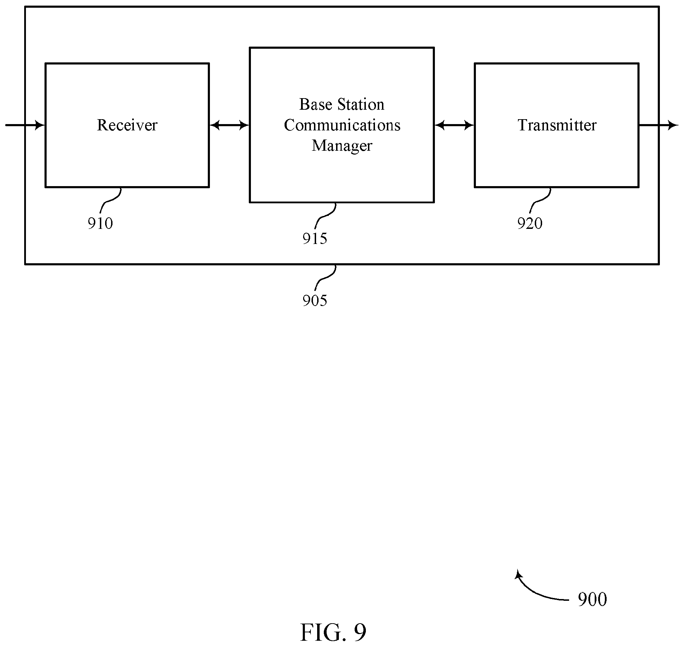

**FIG. 9** shows a block diagram 900 of a wireless device 905 that supports a PDCCH structure in low latency systems in accordance with aspects of the present disclosure. Wireless device 905 may be an example of aspects of a base station 105 as described herein. Wireless device 905 may include receiver 910, base station communications manager 915, and transmitter 920. Wireless device 905 may also include a processor. Each of these components may be in communication with one another (e.g., via one or more buses).

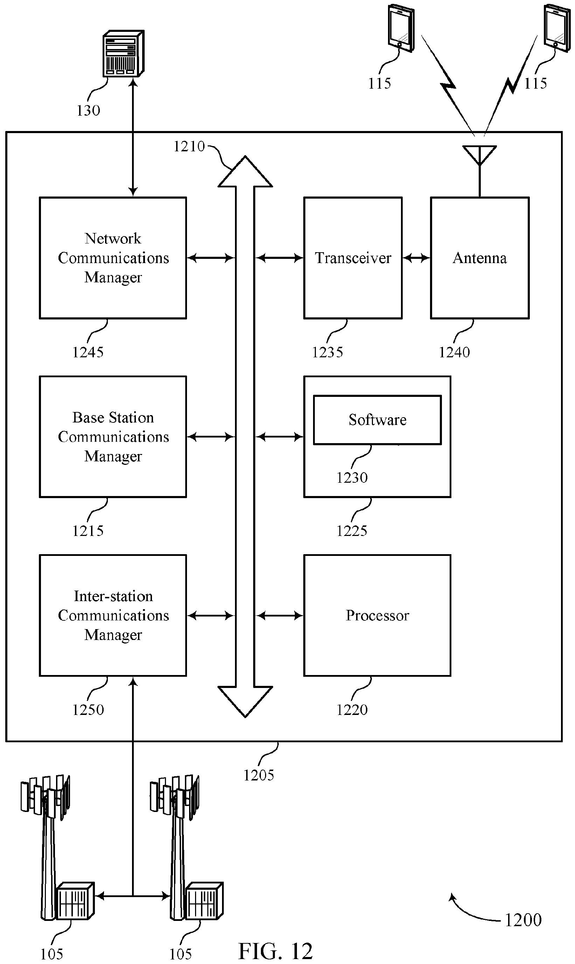

Receiver 910 may receive information such as packets, user data, or control information associated with various information channels (e.g., control channels, data channels, and information related to PDCCH structure in low latency systems, etc.). Information may be passed on to other components of the device. The receiver 910 may be an example of aspects of the transceiver 1235 described with reference to FIG. 12. The receiver 910 may utilize a single antenna or a set of antennas.

Base station communications manager 915 may be an example of aspects of the base station communications manager 1215 described with reference to FIG. 12. Base station communications manager 915 or at least some of its various sub-components may be implemented in hardware, software executed by a processor, firmware, or any combination thereof. If implemented in software executed by a processor, the functions of the base station communications manager 915 or at least some of its various sub-components may be executed by a general-purpose processor, a DSP, an ASIC, an FPGA or other programmable logic device, discrete gate or transistor logic, discrete hardware components, or any combination thereof designed to perform the functions described in the present disclosure.

The base station communications manager 915 or at least some of its various sub-components may be physically located at various positions, including being distributed such that portions of functions are implemented at different physical locations by one or more physical devices. In some examples, base station communications manager 915 or at least some of its various sub-components may be a separate and distinct component in accordance with various aspects of the present disclosure. In other examples, base station communications manager 915 or at least some of its various sub-components may be combined with one or more other hardware components, including but not limited to an I/O component, a transceiver, a network server, another computing device, one or more other components described in the present disclosure, or a combination thereof in accordance with various aspects of the present disclosure.

Base station communications manager 915 may identify a control region of a TTI of the first duration, determine at least one of a CCE structure or an aggregation level for the control region based on an index of the TTI of the first duration, and transmit DCI in the control region of the TTI of the first duration according to the determined CCE structure or the aggregation level.

Transmitter 920 may transmit signals generated by other components of the device. In some examples, the transmitter 920 may be collocated with a receiver 910 in a transceiver module. For example, the transmitter 920 may be an example of aspects of the transceiver 1235 described with reference to FIG. 12. The transmitter 920 may utilize a single antenna or a set of antennas.

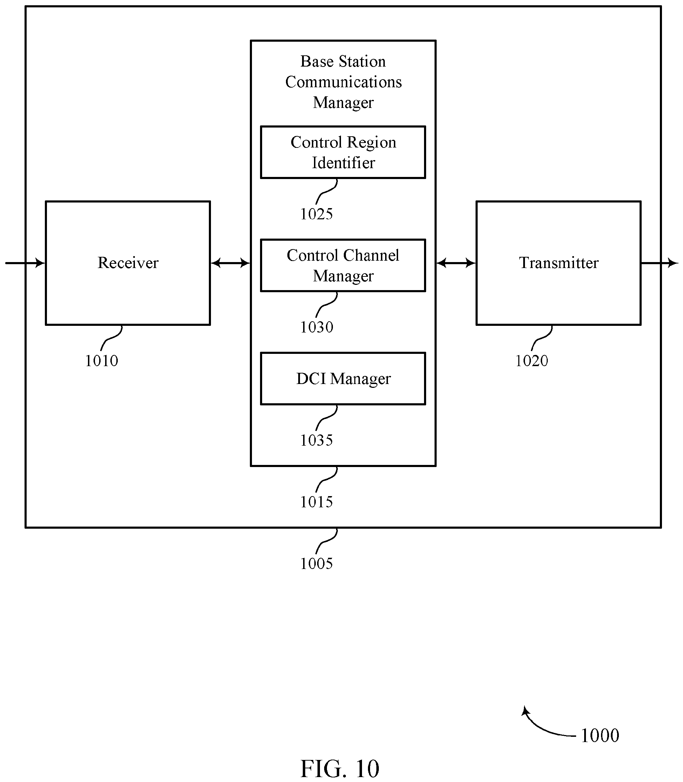

**FIG. 10** shows a block diagram 1000 of a wireless device 1005 that supports a PDCCH structure in low latency systems in accordance with aspects of the present disclosure. Wireless device 1005 may be an example of aspects of a wireless device 905 or a base station 105 as described with reference to FIG. 9. Wireless device 1005 may include receiver 1010, base station communications manager 1015, and transmitter 1020. Wireless device 1005 may also include a processor. Each of these components may be in communication with one another (e.g., via one or more buses).

Receiver 1010 may receive information such as packets, user data, or control information associated with various information channels (e.g., control channels, data channels, and information related to PDCCH structure in low latency systems, etc.). Information may be passed on to other components of the device. The receiver 1010 may be an example of aspects of the transceiver 1235 described with reference to FIG. 12. The receiver 1010 may utilize a single antenna or a set of antennas.

Base station communications manager 1015 may be an example of aspects of the base station communications manager 1215 described with reference to FIG. 12. Base station communications manager 1015 may include control region identifier 1025, control channel manager 1030, and DCI manager 1035.

Control region identifier 1025 may identify a control region of a TTI of the first duration, transmit signaling that indicates a number of symbols that include the control region, transmit additional signaling that indicates a control channel configuration for a set of UEs communicating within the cell, where the additional signaling includes an indication that each UE of the set is configured with a one-symbol control region, or that each UE of the set is configured with a two-symbol control region, or that a first subset of the UEs is configured with a one-symbol control region and a second subset of the UEs is configured with a two-symbol control region, and transmit additional signaling that indicates a portion of a set of resource elements of the control region that comprises DCI. In some cases, each CCE in the control region is assigned an index that indicates a location of the CCE in a frequency domain followed by the location of the CCE in a time domain. In some cases, the number of symbols that include the control region is cell-specific. In some cases, the number of symbols that include the control region is UE-specific.

In some cases, the signaling indicates a control channel configuration for a set of UEs communicating within a cell. In some cases, the signaling indicates that each UE of the set is configured with a one-symbol control region, or that each UE of the set is configured with a two-symbol control region, or that a first subset of the UEs is configured with a one-symbol control region and a second subset of the UEs is configured with a two-symbol control region. In some cases, the number of symbols that include the control region is two. In some cases, each CCE in the control region spans a single symbol in the control region. In some cases, each decoding candidate associated with the aggregation level in the control region spans a single symbol in the control region.

Control channel manager 1030 may determine at least one of a CCE structure or an aggregation level for the control region based on an index of the TTI of the first duration, determine the aggregation level based on the number of symbols that include the control region, and determine the CCE structure or the aggregation level for the control region based on the identification. In some cases, a number of resource elements in each REG is independent of a configured reference signal demodulation scheme. In some cases, a number of resource elements in each REG available for DCI is based on a configured reference signal demodulation scheme. In some cases, one or more of the REGs include resource elements containing CRSs, DMRSs, or CSI-RSs, or any combination thereof. In some cases, the CCE structure includes a fixed number of REGs and the aggregation level is based on the index of the TTI of the first duration. In some cases, one or more of the REGs are exclusive of resource elements containing CRSs, DMRSs, or CSI-RSs, or any combination thereof.

DCI manager 1035 may transmit DCI in the control region of the TTI of the first duration according to the determined CCE structure or the aggregation level, identify whether a number of resource elements available for DCI in the control region is above a threshold, identify whether a mapping of the DCI to the control region is distributed or localized, and identify a format of the DCI.

Transmitter 1020 may transmit signals generated by other components of the device. In some examples, the transmitter 1020 may be collocated with a receiver 1010 in a transceiver module. For example, the transmitter 1020 may be an example of aspects of the transceiver 1235 described with reference to FIG. 12. The transmitter 1020 may utilize a single antenna or a set of antennas.

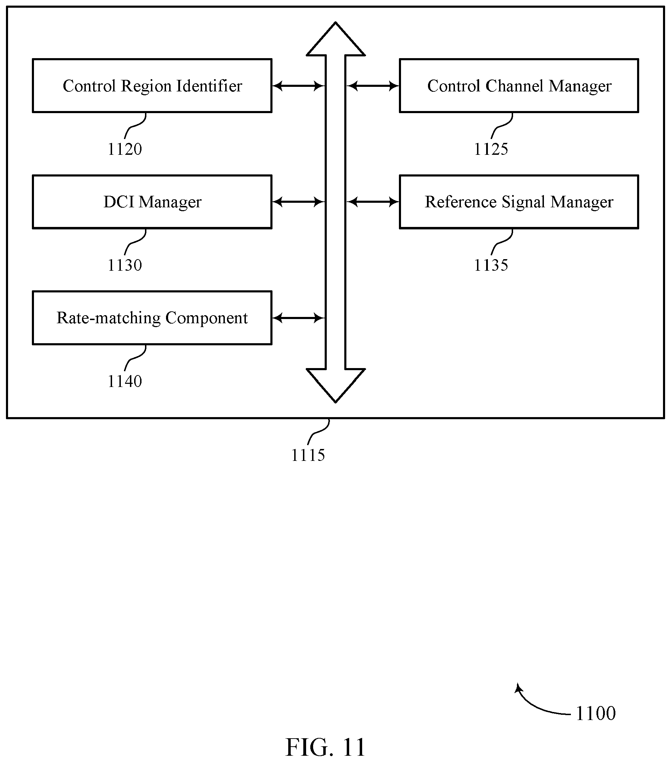

**FIG. 11** shows a block diagram 1100 of a base station communications manager 1115 that supports a PDCCH structure in low latency systems in accordance with aspects of the present disclosure. The base station communications manager 1115 may be an example of aspects of a base station communications manager 1215 described with reference to FIGs. 9, 10, and 12. The base station communications manager 1115 may include control region identifier 1120, control channel manager 1125, DCI manager 1130, reference signal manager 1135, and rate-matching component 1140. Each of these modules may communicate, directly or indirectly, with one another (e.g., via one or more buses).

Control region identifier 1120 may identify a control region of a TTI of the first duration, transmit signaling that indicates a number of symbols that include the control region, transmit additional signaling that indicates a control channel configuration for a set of UEs communicating within the cell, where the additional signaling includes an indication that each UE of the set is configured with a one-symbol control region, or that each UE of the set is configured with a two-symbol control region, or that a first subset of the UEs is configured with a one-symbol control region and a second subset of the UEs is configured with a two-symbol control region, and transmit additional signaling that indicates a portion of a set of resource elements of the control region that includes DCI. In some cases, each CCE in the control region is assigned an index that indicates a location of the CCE in a frequency domain followed by the location of the CCE in a time domain.

In some cases, the number of symbols that include the control region is cell-specific. In some cases, the number of symbols that include the control region is UE-specific. In some cases, the signaling indicates a control channel configuration for a set of UEs communicating within a cell. In some cases, the signaling indicates that each UE of the set is configured with a one-symbol control region, or that each UE of the set is configured with a two-symbol control region, or that a first subset of the UEs is configured with a one-symbol control region and a second subset of the UEs is configured with a two-symbol control region. In some cases, the number of symbols that include the control region is two. In some cases, each CCE in the control region spans a single symbol in the control region. In some cases, each decoding candidate associated with the aggregation level in the control region spans a single symbol in the control region.

Control channel manager 1125 may determine at least one of a CCE structure or an aggregation level for the control region based on an index of the TTI of the first duration, determine the aggregation level based on the number of symbols that include the control region, and determine the CCE structure or the aggregation level for the control region based on the identification. In some cases, a number of resource elements in each REG is independent of a configured reference signal demodulation scheme. In some cases, a number of resource elements in each REG available for DCI is based on a configured reference signal demodulation scheme. In some cases, one or more of the REGs include resource elements containing CRSs, DMRSs, or CSI-RSs, or any combination thereof. In some cases, the CCE structure includes a fixed number of REGs and the aggregation level is based on the index of the TTI of the first duration. In some cases, one or more of the REGs are exclusive of resource elements containing CRSs, DMRSs, or CSI-RSs, or any combination thereof.

DCI manager 1130 may transmit DCI in the control region of the TTI of the first duration according to the determined CCE structure or the aggregation level, identify whether a number of resource elements available for DCI in the control region is above a threshold, identify whether a mapping of the DCI to the control region is distributed or localized, and identify a format of the DCI.

Reference signal manager 1135 may identify whether resource elements in the control region contain DMRSs or whether the control region is configured for DMRS-based demodulation. Rate-matching component 1140 may rate-match data bits around resource elements used for the transmission of the DCI based on the number of symbols that include the control region and transmit the rate-matched data bits during the TTI of the first duration.

**FIG. 12** shows a diagram of a system 1200 including a device 1205 that supports a PDCCH structure in low latency systems in accordance with aspects of the present disclosure. Device 1205 may be an example of or include the components of base station 105 as described above, e.g., with reference to FIG. 1. Device 1205 may include components for bi-directional voice and data communications including components for transmitting and receiving communications, including base station communications manager 1215, processor 1220, memory 1225, software 1230, transceiver 1235, antenna 1240, network communications manager 1245, and inter-station communications manager 1250. These components may be in electronic communication via one or more buses (e.g., bus 1210). Device 1205 may communicate wirelessly with one or more UEs 115.

Processor 1220 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, processor 1220 may be configured to operate a memory array using a memory controller. In other cases, a memory controller may be integrated into processor 1220. Processor 1220 may be configured to execute computer-readable instructions stored in a memory to perform various functions (e.g., functions or tasks supporting PDCCH structure in low latency systems).

Memory 1225 may include RAM and ROM. The memory 1225 may store computer-readable, computer-executable software 1230 including instructions that, when executed, cause the processor to perform various functions described herein. In some cases, the memory 1225 may contain, among other things, a BIOS which may control basic hardware or software operation such as the interaction with peripheral components or devices.

Software 1230 may include code to implement aspects of the present disclosure, including code to support PDCCH structure in low latency systems. Software 1230 may be stored in a non-transitory computer-readable medium such as system memory or other memory. In some cases, the software 1230 may not be directly executable by the processor but may cause a computer (e.g., when compiled and executed) to perform functions described herein.

Transceiver 1235 may communicate bi-directionally, via one or more antennas, wired, or wireless links as described above. For example, the transceiver 1235 may represent a wireless transceiver and may communicate bi-directionally with another wireless transceiver. The transceiver 1235 may also include a modem to modulate the packets and provide the modulated packets to the antennas for transmission, and to demodulate packets received from the antennas.

In some cases, the wireless device may include a single antenna 1240. However, in some cases the device may have more than one antenna 1240, which may be capable of concurrently transmitting or receiving multiple wireless transmissions.

Network communications manager 1245 may manage communications with the core network (e.g., via one or more wired backhaul links). For example, the network communications manager 1245 may manage the transfer of data communications for client devices, such as one or more UEs 115.

Inter-station communications manager 1250 may manage communications with other base station 105, and may include a controller or scheduler for controlling communications with UEs 115 in cooperation with other base stations 105. For example, the inter-station communications manager 1250 may coordinate scheduling for transmissions to UEs 115 for various interference mitigation techniques such as beamforming or joint transmission. In some examples, inter-station communications manager 1250 may provide an X2 interface within an LTE/LTE-A wireless communication network technology to provide communication between base stations 105.

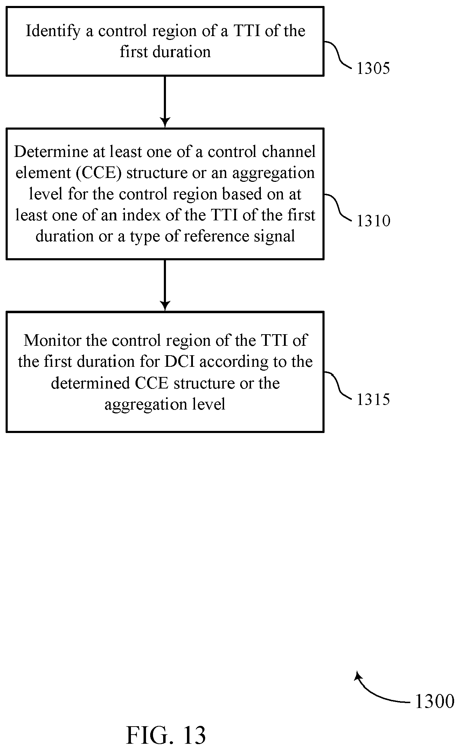

**FIG. 13** shows a flowchart illustrating a method 1300 that supports a PDCCH structure in low latency systems in accordance with aspects of the present disclosure. The operations of method 1300 may be implemented by a UE 115 or its components as described herein. For example, the operations of method 1300 may be performed by a UE communications manager as described with reference to FIGs. 5 through 8. In some examples, a UE 115 may execute a set of codes to control the functional elements of the device to perform the functions described below. Additionally or alternatively, the UE 115 may perform aspects of the functions described below using special-purpose hardware.

At block 1305 the UE 115 may identify a control region of a TTI of the first duration. The operations of block 1305 may be performed according to the methods described herein. In certain examples, aspects of the operations of block 1305 may be performed by a control region identifier as described with reference to FIGs. 5 through 8.

At block 1310 the UE 115 may determine at least one of a CCE structure or an aggregation level for the control region based at least in part on at least one of an index of the TTI of the first duration or a type of reference signal. The operations of block 1310 may be performed according to the methods described herein. In certain examples, aspects of the operations of block 1310 may be performed by a control channel manager as described with reference to FIGs. 5 through 8.

At block 1315 the UE 115 may monitor the control region of the TTI of the first duration for DCI according to the determined CCE structure or the aggregation level. The operations of block 1315 may be performed according to the methods described herein. In certain examples, aspects of the operations of block 1315 may be performed by a DCI manager as described with reference to FIGs. 5 through 8.

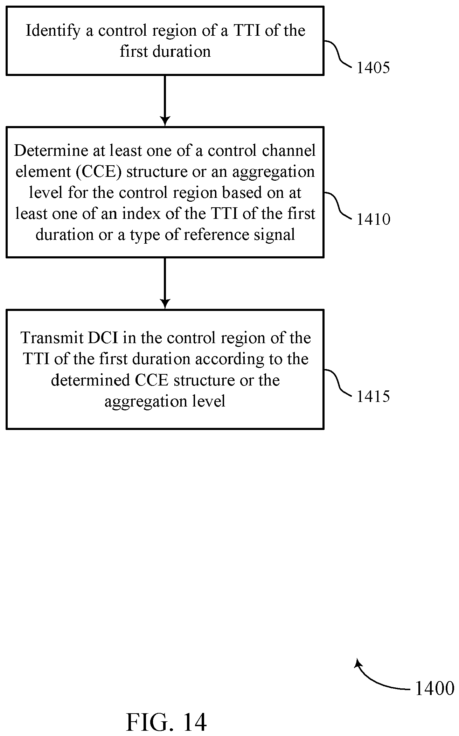

**FIG. 14** shows a flowchart illustrating a method 1400 that supports a PDCCH structure in low latency systems in accordance with aspects of the present disclosure. The operations of method 1400 may be implemented by a base station 105 or its components as described herein. For example, the operations of method 1400 may be performed by a base station communications manager as described with reference to FIGs. 9 through 12. In some examples, a base station 105 may execute a set of codes to control the functional elements of the device to perform the functions described below. Additionally or alternatively, the base station 105 may perform aspects of the functions described below using special-purpose hardware.

At block 1405 the base station 105 may identify a control region of a TTI of the first duration. The operations of block 1405 may be performed according to the methods described herein. In certain examples, aspects of the operations of block 1405 may be performed by a control region identifier as described with reference to FIGs. 9 through 12.

At block 1410 the base station 105 may determine at least one of a CCE structure or an aggregation level for the control region based at least in part on at least one of an index of the TTI of the first duration or a type of reference signal. In some cases, determining the aggregation level for DCI transmissions may also refer to determining the number of blind decodes per aggregation level, which may be a function of the sTTI index or a group of sTTI indices. The operations of block 1410 may be performed according to the methods described herein. In certain examples, aspects of the operations of block 1410 may be performed by a control channel manager as described with reference to FIGs. 9 through 12.

At block 1415 the base station 105 may transmit DCI in the control region of the TTI of the first duration according to the determined CCE structure or the aggregation level. The operations of block 1415 may be performed according to the methods described herein. In certain examples, aspects of the operations of block 1415 may be performed by a DCI manager as described with reference to FIGs. 9 through 12.

It should be noted that the methods described above describe possible implementations, and that the operations and the steps may be rearranged or otherwise modified and that other implementations are possible. Further, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. The terms "system" and "network" are often used interchangeably. A code division multiple access (CDMA) system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 IX, IX, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications System (UMTS). LTE and LTE-A are releases of UMTS that use E-UTRA. UTRA, E-UTRA, UMTS, LTE, LTE-A, NR, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. While aspects of an LTE or an NR system may be described for purposes of example, and LTE or NR terminology may be used in much of the description, the techniques described herein are applicable beyond LTE or NR applications.

In LTE/LTE-A networks, including such networks described herein, the term evolved node B (eNB) may be generally used to describe the base stations. The wireless communications system or systems described herein may include a heterogeneous LTE/LTE-A or NR network in which different types of eNBs provide coverage for various geographical regions. For example, each eNB, next generation NodeB (gNB), or base station may provide communication coverage for a macro cell, a small cell, or other types of cell. The term "cell" may be used to describe a base station, a carrier or component carrier associated with a base station, or a coverage area (e.g., sector, etc.) of a carrier or base station, depending on context.

Base stations may include or may be referred to by those skilled in the art as a base transceiver station, a radio base station, an access point, a radio transceiver, a NodeB, eNodeB (eNB), gNB, Home NodeB, a Home eNodeB, or some other suitable terminology. The geographic coverage area for a base station may be divided into sectors making up only a portion of the coverage area. The wireless communications system or systems described herein may include base stations of different types (e.g., macro or small cell base stations). The UEs described herein may be able to communicate with various types of base stations and network equipment including macro eNBs, small cell eNBs, gNBs, relay base stations, and the like. There may be overlapping geographic coverage areas for different technologies.

A macro cell generally covers a relatively large geographic area (e.g., several kilometers in radius) and may allow unrestricted access by UEs with service subscriptions with the network provider. A small cell is a lower-powered base station, as compared with a macro cell, that may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells (e.g., component carriers).

The wireless communications system or systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

The downlink transmissions described herein may also be called forward link transmissions while the uplink transmissions may also be called reverse link transmissions. Each communication link described herein-including, for example, wireless communications system 100 and 200 of FIGs. 1 and 2-may include one or more carriers, where each carrier may be a signal made up of multiple sub-carriers (e.g., waveform signals of different frequencies).

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of' or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," "component," and the like may not be a substitute for the word "means." As such, no claim element is to be construed as a means plus function unless the element is expressly recited using the phrase "means for."

### EXAMPLES

1. A method for wireless communication in a system that supports a first transmission time interval (TTI) duration and a second TTI duration that is greater than the first TTI duration, comprising: identifying a control region of a TTI of the first duration; determining at least one of a control channel element (CCE) structure or an aggregation level for the control region based at least in part on at least one of an index of the TTI of the first duration or a type of reference signal; and monitoring the control region of the TTI of the first duration for downlink control information (DCI) according to the determined CCE structure or the aggregation level.
2. The method of example 1, wherein the CCE structure comprises a fixed number of resource element groups (REGs) and the aggregation level is based at least in part on the index of the TTI of the first duration.
3. The method of example 2, wherein a number of resource elements in each REG is independent of a configured reference signal demodulation scheme.
4. The method of example 2, wherein a number of resource elements in each REG available for DCI is based at least in part on a configured reference signal demodulation scheme.
5. The method of example 2, wherein one or more of the REGs comprise resource elements containing cell-specific reference signals (CRSs), demodulation reference signals (DMRSs), or channel state information reference signals (CSI-RSs), or any combination thereof.
6. The method of example 2, wherein one or more of the REGs are exclusive of resource elements containing cell-specific reference signals (CRSs), demodulation reference signals (DMRSs), or channel state information reference signals (CSI-RSs), or any combination thereof.
7. The method of example 1, wherein determining at least one of the control channel element (CCE) structure or the aggregation level for the control region further comprises: determining a number of blind decodes per aggregation level.
8. The method of example 1, further comprising: identifying whether a number of resource elements available for DCI in the control region is above a threshold; and determining the CCE structure or the aggregation level for the control region based at least in part on the identification.
9. The method of example 1, further comprising: identifying whether resource elements in the control region contain demodulation reference signals (DMRSs) or whether the control region is configured for DMRS-based demodulation; and determining the CCE structure or the aggregation level for the control region based at least in part on the identification.
10. The method of example 1, further comprising: identifying whether a mapping of the DCI to the control region is distributed or localized; and determining the CCE structure or the aggregation level for the control region based at least in part on the identification.
11. The method of example 1, further comprising: identifying a format of the DCI; and determining the CCE structure or the aggregation level for the control region based at least in part on the identification.
12. The method of example 1, further comprising: receiving signaling that indicates a number of symbols that comprise the control region.
13. The method of example 12, further comprising: determining the aggregation level based at least in part on the number of symbols that comprise the control region.
14. The method of example 12, further comprising: receiving data during the TTI of the first duration using rate-matching that is based at least in part on the number of symbols that comprise the control region.
15. The method of example 12, wherein the number of symbols that comprise the control region is cell-specific.
16. The method of example 12, wherein the number of symbols that comprise the control region is user equipment (UE)-specific.
17. The method of example 16, wherein the signaling indicates a control channel configuration for a set of UEs communicating within a cell.
18. The method of example 17, wherein the signaling indicates that each UE of the set is configured with a one-symbol control region, or that each UE of the set is configured with a two-symbol control region, or that a first subset of the UEs is configured with a one-symbol control region and a second subset of the UEs is configured with a two-symbol control region.
19. The method of example 16, further comprising: receiving additional signaling that indicates a control channel configuration for a set of UEs communicating within a cell, wherein the additional signaling comprises an indication that each UE of the set is configured with a one-symbol control region, or that each UE of the set is configured with a two-symbol control region, or that a first subset of the UEs is configured with a one-symbol control region and a second subset of the UEs is configured with a two-symbol control region.
20. The method of example 16, further comprising: receiving additional signaling that indicates a portion of a set of resource elements of the control region that comprises DCI.
21. The method of example 12, wherein the number of symbols that comprise the control region is two.
22. The method of example 21, wherein each CCE in the control region spans a single symbol in the control region.
23. The method of example 21, wherein each decoding candidate associated with the aggregation level in the control region spans a single symbol in the control region.
24. The method of example 2, wherein each REG is assigned an index that indicates a location of the REG in a frequency domain followed by the location of the REG in a time domain.
25. A method for wireless communication in a system that supports a first transmission time interval (TTI) duration and a second TTI duration that is greater than the first TTI duration, comprising: identifying a control region of a TTI of the first duration; determining at least one of a control channel element (CCE) structure or an aggregation level for the control region based at least in part on at least one of an index of the TTI of the first duration or a type of reference signal; and transmitting downlink control information (DCI) in the control region of the TTI of the first duration according to the determined CCE structure or the aggregation level.
26. The method of example 25, wherein the CCE structure comprises a fixed number of resource element groups (REGs) and the aggregation level is based at least in part on the index of the TTI of the first duration.
27. The method of example 26, wherein a number of resource elements in each REG is independent of a configured reference signal demodulation scheme.
28. The method of example 26, wherein a number of resource elements in each REG available for DCI is based at least in part on a configured reference signal demodulation scheme.
29. The method of example 26, wherein one or more of the REGs comprise resource elements containing cell-specific reference signals (CRSs), demodulation reference signals (DMRSs), or channel state information reference signals (CSI-RSs), or any combination thereof.
30. The method of example 26, wherein one or more of the REGs are exclusive of resource elements containing cell-specific reference signals (CRSs), demodulation reference signals (DMRSs), or channel state information reference signals (CSI-RSs), or any combination thereof.
31. The method of example 25, further comprising: identifying whether a number of resource elements available for DCI in the control region is above a threshold; and determining the CCE structure or the aggregation level for the control region based at least in part on the identification.
32. The method of example 25, further comprising: identifying whether resource elements in the control region contain demodulation reference signals (DMRSs) or whether the control region is configured for DMRS-based demodulation; and determining the CCE structure or the aggregation level for the control region based at least in part on the identification.
33. The method of example 25, further comprising: identifying whether a mapping of the DCI to the control region is distributed or localized; and determining the CCE structure or the aggregation level for the control region based at least in part on the identification.
34. The method of example 25, further comprising: identifying a format of the DCI; and determining the CCE structure or the aggregation level for the control region based at least in part on the identification.
35. The method of example 25, further comprising: transmitting signaling that indicates a number of symbols that comprise the control region.
36. The method of example 35, further comprising: determining the aggregation level based at least in part on the number of symbols that comprise the control region.
37. The method of example 35, further comprising: rate-matching data bits around resource elements used for the transmission of the DCI based at least in part on the number of symbols that comprise the control region; and transmitting the rate-matched data bits during the TTI of the first duration.
38. The method of example 35, wherein the number of symbols that comprise the control region is cell-specific.
39. The method of example 35, wherein the number of symbols that comprise the control region is user equipment (UE)-specific.
40. The method of example 35, wherein the signaling indicates a control channel configuration for a set of UEs communicating within a cell.
41. The method of example 35, wherein the signaling indicates that each UE of the set is configured with a one-symbol control region, or that each UE of the set is configured with a two-symbol control region, or that a first subset of the UEs is configured with a one-symbol control region and a second subset of the UEs is configured with a two-symbol control region.
42. The method of example 39, further comprising: transmitting additional signaling that indicates a control channel configuration for a set of UEs communicating within a cell, wherein the additional signaling comprises an indication that each UE of the set is configured with a one-symbol control region, or that each UE of the set is configured with a two-symbol control region, or that a first subset of the UEs is configured with a one-symbol control region and a second subset of the UEs is configured with a two-symbol control region.
43. The method of example 39, further comprising: transmitting additional signaling that indicates a portion of a set of resource elements of the control region that comprises DCI.
44. The method of example 35, wherein the number of symbols that comprise the control region is two.
45. The method of example 44, wherein each CCE in the control region spans a single symbol in the control region.
46. The method of example 44, wherein each decoding candidate associated with the aggregation level in the control region spans a single symbol in the control region.
47. The method of example 26, wherein each REG is assigned an index that indicates a location of the REG in a frequency domain followed by the location of the REG in a time domain.
48. An apparatus for wireless communication in a system that supports a first transmission time interval (TTI) duration and a second TTI duration that is greater than the first TTI duration, comprising: means for identifying a control region of a TTI of the first duration; means for determining at least one of a control channel element (CCE) structure or an aggregation level for the control region based at least in part on at least one of an index of the TTI of the first duration or a type of reference signal; and means for monitoring the control region of the TTI of the first duration for downlink control information (DCI) according to the determined CCE structure or the aggregation level.
49. An apparatus for wireless communication in a system that supports a first transmission time interval (TTI) duration and a second TTI duration that is greater than the first TTI duration, comprising: means for identifying a control region of a TTI of the first duration; means for determining at least one of a control channel element (CCE) structure or an aggregation level for the control region based at least in part on at least one of an index of the TTI of the first duration or a type of reference signal; and means for transmitting downlink control information (DCI) in the control region of the TTI of the first duration according to the determined CCE structure or the aggregation level.
50. An apparatus for wireless communication in a system that supports a first transmission time interval (TTI) duration and a second TTI duration that is greater than the first TTI duration, comprising: a processor; memory in electronic communication with the processor; and instructions stored in the memory and operable, when executed by the processor, to cause the apparatus to: identify a control region of a TTI of the first duration; determine at least one of a control channel element (CCE) structure or an aggregation level for the control region based at least in part on at least one of an index of the TTI of the first duration or a type of reference signal; and monitor the control region of the TTI of the first duration for downlink control information (DCI) according to the determined CCE structure or the aggregation level.
51. An apparatus for wireless communication in a system that supports a first transmission time interval (TTI) duration and a second TTI duration that is greater than the first TTI duration, comprising: a processor; memory in electronic communication with the processor; and instructions stored in the memory and operable, when executed by the processor, to cause the apparatus to: identify a control region of a TTI of the first duration; determine at least one of a control channel element (CCE) structure or an aggregation level for the control region based at least in part on at least one of an index of the TTI of the first duration or a type of reference signal; and transmit downlink control information (DCI) in the control region of the TTI of the first duration according to the determined CCE structure or the aggregation level.
52. A non-transitory computer readable medium storing code for wireless communication in a system that supports a first transmission time interval (TTI) duration and a second TTI duration that is greater than the first TTI duration, the code comprising instructions executable by a processor to: identify a control region of a TTI of the first duration; determine at least one of a control channel element (CCE) structure or an aggregation level for the control region based at least in part on at least one of an index of the TTI of the first duration or a type of reference signal; and monitor the control region of the TTI of the first duration for downlink control information (DCI) according to the determined CCE structure or the aggregation level.
53. A non-transitory computer readable medium storing code for wireless communication in a system that supports a first transmission time interval (TTI) duration and a second TTI duration that is greater than the first TTI duration, the code comprising instructions executable by a processor to: identify a control region of a TTI of the first duration; determine at least one of a control channel element (CCE) structure or an aggregation level for the control region based at least in part on at least one of an index of the TTI of the first duration or a type of reference signal; and transmit downlink control information (DCI) in the control region of the TTI of the first duration according to the determined CCE structure or the aggregation level.

## Claims

1. A method for wireless communication in a system, comprising:
determining a control channel element, CCE, structure for a control region of a shortened transmission time interval, sTTI, based on a demodulation reference signal, DMRS, the CCE structure varies based at least in part on the DMRS; and
monitoring the control region for downlink control information, DCI, according to the determined CCE structure.

2. The method of claim 1, wherein the CCE structure comprises resource element groups, REGs, and each of the REGs has nine resource elements available for the DCI, and three resource elements of the DMRS.

3. An apparatus for wireless communication in a system, comprising:
means for determining a control channel element, CCE, structure for a control region, based on a demodulation reference signal, DMRS, the CCE structure varies based at least in part on the DMRS; and
means for monitoring the control region for downlink control information, DCI, according to the determined CCE structure.

4. The apparatus of claim 3, wherein the CCE structure comprises resource element groups, REGs, and each of the REGs has nine resource elements available for the DCI, and three resource elements of the DMRS.

5. A method for wireless communication in a system, comprising:
determining a control channel element, CCE, structure for a control region of a shortened transmission time interval, sTTI, based on a demodulation reference signal, DMRS, the CCE structure varies based at least in part on the DMRS; and
transmitting downlink control information, DCI, in the control region according to the determined CCE structure.

6. The method of claim 5, wherein the CCE structure comprises resource element groups, REGs, and each of the REGs has nine resource elements available for the DCI, and three resource elements of the DMRS.

7. An apparatus for wireless communication in a system, comprising:
means for determining a control channel element, CCE, structure for a control region of a shortened transmission time interval, sTTI, based on a demodulation reference signal, DMRS, the CCE structure varies based at least in part on the DMRS; and
means for transmitting downlink control information, DCI, in the control region according to the determined CCE structure.

8. The apparatus of claim 7, wherein the CCE structure comprises resource element groups, REGs, and each of the REGs has nine resource elements available for the DCI, and three resource elements of the DMRS.
